(19) Europäisches Patentamt
European Patent Office
Office européen des brevets

(11) **EP 2 461 271 A2**

(12) **EUROPEAN PATENT APPLICATION**
published in accordance with Art. 153(4) EPC

(43) Date of publication:
**06.06.2012 Bulletin 2012/23**

(51) Int Cl.:
***G06K 9/00*** *(2006.01)*

(21) Application number: **10803938.9**

(22) Date of filing: **30.07.2010**

(86) International application number:
**PCT/ES2010/000350**

(87) International publication number:
**WO 2011/012747 (03.02.2011 Gazette 2011/05)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.07.2009 ES 200901732**

(71) Applicants:
- **Fundación Para Progreso Del Soft Computing 33600 Mieres (Asturias) (ES)**
- **Universidad de Granada 18071 Granada (ES)**

(72) Inventors:
- **CORDÓN GARCÍA, Óscar 33600 Mieres (Asturias) (ES)**
- **DAMAS ARROYO, Sergio 33600 Mieres (Asturias) (ES)**
- **IBÁÑEZ PANIZO, Óscar 33600 Mieres (Asturias) (ES)**
- **SANTAMARÍA LÓPEZ, José 18071 Granada (ES)**
- **ALEMÁN AGUILERA, Inmaculada 18071 Granada (ES)**
- **BOTELLA LÓPEZ, Miguel Cecilio 18071 Granada (ES)**

(74) Representative: **Temino Ceniceros, Ignacio Abril Abogados Amador de los Rios 1-1° 28010 Madrid (ES)**

(54) **FORENSIC IDENTIFICATION SYSTEM USING CRANIOFACIAL SUPERIMPOSITION BASED ON SOFT COMPUTING**

(57) This invention relates to a method and an automatic system for assisting a forensic anthropologist in the task of identification by means of craniofacial superimposition. First, the system automatically builds a three-dimensional model from a device providing partial views of the skull. Said model is then superimposed onto a photograph of the disappeared person, modelling the inherent uncertainty to the pairing of two separate objects: a skull and a face. Finally, the system emits a recommendation from the result of the identification process to the forensic anthropologist.

Figure 2

**Description**

**ART SECTOR**

This invention patent relates to solving the problem of using craniofacial superimposition for forensic identification. In general terms it directly applies to the search for missing persons, incidents involving large number of casualties and natural disasters. As such, it may be useful to law enforcement agencies, specifically the judicial and scientific branch of the Policia Nacional (National Police) and the Guardia Civil (Civil Guard) respectively, and the legal and forensic medicine institutes. Also, it can be directly applied in three-dimensional object acquisition and reconstruction models as well as laser range scanners.

**STATE OF THE ART**

One of the most important tasks of Forensic Anthropology is the identification of human beings based on their skeletal remains. This work requires comparing pre-mortem data (which are obtained from visual material and interviews conducted with family members and witnesses) and post-mortem. One of the most successful forensic techniques is the craniofacial superimposition, where photographs or video photograms of a missing person are compared with the cranial that is found. By projecting both photographs one on top of the other (or better yet, by pairing the photograph with the three-dimensional model of the cranial) it can be determined if it is the same person. This process is carried out manually, normally using a computer to display the images of both objects. The process is repetitive and is completed when a forensic expert determines that from an overall perspective, the best possible superimposition has been obtained. Finally, in view of the specific anthropometric characteristics of the obtained superimposition, the expert makes a determination regarding the identification process using one of the following terms: Positive, negative, probably positive, probably negative and uncertain.

This invention is prompted by a new automatic system method that aids the forensic anthropologist in the task of identification using craniofacial superimposition. Be aware that no methodology exists that provides an integral solution to this process. Also, this invention allows formulating a hypothesis regarding the possible relationship between the cranial and the photograph, considering for this, the uncertainty that is present in the process. The accuracy of the provided results is so high, that it may be used in real forensic identification cases.

It is important to identify the problem solved by this invention from a series of related techniques, regarding the fundamental procedures (anthropologic studies that relate the cranial and the face) or regarding the formulation of the problem (pairing of images):

- On the other hand, facial reconstruction uses the same principles as craniofacial superimposition but its purpose is to represent a person's face from his or her cranial. To accomplish this, a series of landmarks are made on the main craniometric points that provide the thickness of the soft facial tissue, which is used to model the rest of the facial structures. American patent request US0111631 describes a system for facial reconstruction. One of the main problems of this technique is that it has been proven that there are many variations in the different morphological facial features, which are particular to each face. On the other hand, many differences also exist regarding facial tissues, which are related with age, changes in weight, animic state, etc. Worth highlighting is the facial recreations of hominids (Atapuerca/ antecessor) or of historic persons (Galileo Galilei, Tutankhamun), which are of great value from a media or didactic point of view. However, from a forensic Anthropology field perspective, the technique has many limitations and is only used for making approximations that may help start an investigation, but are never used for making an identification.

- On the other hand, several proposals exist for automatic superimposing of 3D models of the face over 2D photographs of the face as well [Patents US0196000 or US7421097]. A review of the state of the art can be found in [K.W. Bowyer, K. Chang and P. Flynn, "A survey of approaches and challenges in 3D and multi-modal 3D + 2D face recognition" Computer Vision and Image Understanding, Vol. 101, pages. 1-15, 2006]. However, it deals with face recognition, which is a completely different problem entailing the superimposition of a 3D object (a 3D model of the face) with a 2D projection (a photograph of the face) of the same object. Please note that craniofacial superimposition is a much more complex problem when the two objects that are to be paired are different (a 3D model of the cranial and a 2D photograph of the face). In face recognition there is no need to cover the uncertainty present in real craniofacial superimposition cases where the thickness of the tissue covering the cranial must be taken into consideration. Also, contrary to real cases of forensic identification, in face recognition problems, all the data relative to the camera are known. In forensic identification cases, the family of the missing person usually provides the photographs without any additional information, and in some cases, they are modified using pre-processed algorithms (cutting, rescaling, colour and contrast transformations, etc.), which may negatively affect the results.

A general methodology does not exist for the craniofacial superimposition identification process. This is due to the complexity of the projection procedure (the skull and the face are two different objects, which are not directly correlated due to the presence of meat and skin in the second) as well as the uncertainty inherent to the decision process (with several confidence levels depending on the degree of conservation of the sample and the quality of the photographs available for the analytic process that is carried out by the Coroner.

Some craniofacial superimposition methods exist that use computers to aid in the superimposition process and/or for displaying the skull and the face. However, the size and orientation of the skull are manually changed in order to properly adjust the pose of the head in the photograph. This is accomplished by, either physically moving the skull, and using the computer only for displaying it on the monitor, or by moving a digital image on the screen until a good superimposition is achieved on the screen (aided by commercial software). These methods use digital images but as already stated, they are not automatic since the tasks of re-dimensioning, transfer and rotation by trial and error are carried out manually, which takes a long time and is a process that is affected by multiple errors. Worth mentioning is that forensic experts may employ around 24 hours in each case. The works of Ubelaker et al. [D.H. Ubelaker, E. Bubniak, G. O'Donnel, "Computer-assisted photographic superimposition", Journal of Forensic Sciences Vol. 37 (3), pages. 750-762, 1992], Yoshino et al. [M. Yoshino, H. Matsuda, S. Kubota, K. Imaizumi, S. Miyasaka, S. Seta, "Computer-assisted skull identification system using video superimposition", Forensic Science International Vol. 90, pages. 231-244, 1997] and Ricci et al. [A. Ricci, G.L. Marella, M.A. Apostol, "A new experimental approach to computer-aided face/skull identification in forensic anthropology", American Journal of Forensic Medicine and Pathology Vol. 27 (1), pages. 46-49, 2006] are typical examples of what we consider computer assisted superimpositions.

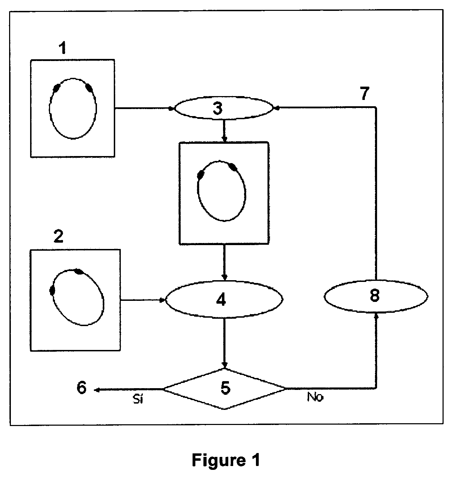

We also find a limited number of automatic methods where the first two stages in the craniofacial superimposition process, the tree-dimensional model of the skull and the skull-face projection, may be approached as an image recording problem. In this case, it is a matter of taking advantage of the computer's computing power in order to find the spatial transformation to achieve the best pairing between two images (Figure 1) in order to reconstruct the 3D model of the skull or to automatically find the optimum superimposition between this model and the 2D photograph of the face using computer algorithms. To date, automatic methods have not been used in real applications in spite of the large number of cases examined [D.H. Ubelaker, "A history of Smithsonian-FBI collaboration in forensic anthropology, especially in regard to facial imagery", Forensic Science Communications Vol. 2 (4), 2000]. Only two proposals exist that automatically perform craniofacial superimposition based on neural networks [A. Ghosh, P. Sinha, "An economised craniofacial identification system", Forensic Science International Vol. 117 (1-2), pages. 109-119, 2001] and genetic algorithms [B.A. Nickerson, P.A. Fitzhorn, S.K. Koch, M. Charney, "A methodology for near-optimal computational superimposition of two-dimensional digital facial photographs and three-dimensional cranial surface meshes", Journal of Forensic Sciences Vol. 36 (2), pages. 480-500, 1991], respectively. The method proposed by Ghosh and Sinha have two important limitations (already mentioned by the authors): It was not possible to adequately project an area of the skull and it required having front images available. But without a doubt, the greatest limitation of the method is that it carries out a 2D-2D pairing, since a 3D model of the skull is not available. This greatly simplifies the superimposition task but it is not effective for use in real forensic identification cases. On the other hand, the Nickerson method used a genetic algorithm [D.E. Goldberg, "Genetic algorithms in search, optimization, and machine learning", Addison-Wesley, 1989.] to find the optimum parameters of the similarity and perspective transformations that superimpose the 3D model of the skull over the face of the photograph. The use of a digital camera was considered for digitizing the photograph and based on a 3D model of the skull that had been found (the method used for obtaining it is not described), as well as classic image processing algorithms in order to improve these (median filter, histogram equalization, Weiner filter). None of these works formulate hypothesis regarding the possibility of the skull and the photograph belonging to the same person and the uncertainty present in all superimposition process stages is not considered. Accordingly, the results are not accurate enough for use in forensic identification. Additionally, it is not an automatic identification system since the method does not include the digitizing of the skull.

## DESCRIPTION OF THE INVENTION

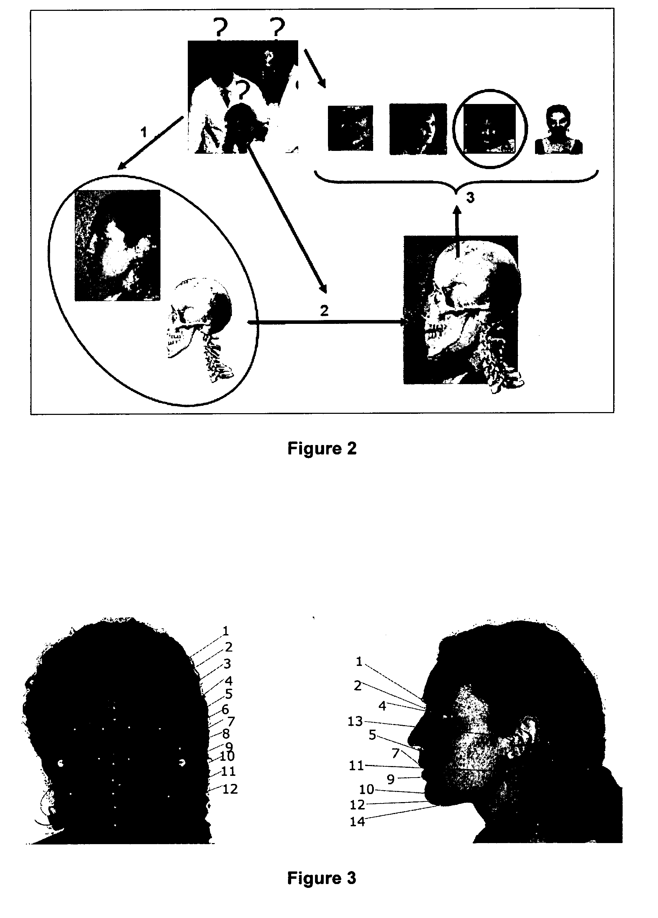

These and other objects of this invention are achieved using a computer based automatic procedure in accordance with independent claim 1, to help the forensic anthropologist in the identification by craniofacial superimposition task. In this task, three main stages are considered (Figure 2):

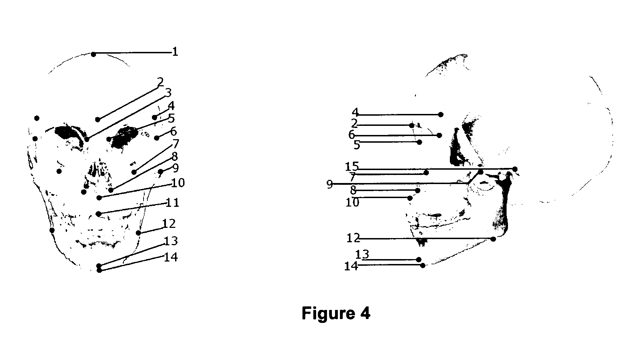

1. The first stage consists in automatically obtaining a precise digital model of the skull, requiring as little involvement as possible by the forensic expert. The second stage is known as the skull-face projection and its purpose is to properly project the 3D model of the cranial over the photograph. To accomplish this, the system described in this invention uses two sets of landmarks as a base (Figures 3 and 4), which are selected by the forensic expert. A set over the photograph of the face (Cephalometric points, Figure 3) and another set in the 3D model of the skull (craniometric points, Figure 4). The intent is then to appropriately pair both sets.

2. The last stage involves making an identification decision using the same terms that are used by forensic experts (positive, negative, probably positive, probably negative, and uncertain). The quality of the pairings between landmark pairs is considered when making this decision.

This invention accomplishes the task of identification by craniofacial superimposition by designing an information system based on the use of soft computing techniques [P.P. Bonissone, "Soft computing: The convergence of emerging reasoning technologies". Soft Computing Vol. 1 (1), pages. 6-18, 1997]. Specifically, this system models the uncertainty inherent to this forensic identification method using fuzzy logic [G. J. Klir, B. Yuan, Eds. "Fuzzy sets, fuzzy logic, and fuzzy systems: selected papers by Lotfi A. Zadeh". World Scientific Publishing, 1996]. Also, the proposed system incorporates a new methodology based on exploiting the information derived from the pairing of landmarks on the skull and face for which metaheuristics are used [F. Glover, G. Kochenberger, Eds. "Handbook of Metaheuristics", Kluwer Academic Publishers, 2003] and other advance algorithms for optimization and searching [T. Back, D. B. Fogel, Z. Michalewicz, Eds. "Handbook of Evolutionary Computation", IOP Publishing Ltd and Oxford University Press, 1997] like for example, Scatter Search [Laguna, M., Marti, R. "Scatter Search: Methodology and Implementations in C". Kluwer Academic Publishers, 2003], CHC [Eshelman, L. J. "The CHC adaptive search algorithm: How to have safe search when engaging in non-traditional genetic recombination". In G.J.E. Rawlins (Ed.), Foundations of Genetic Algorithms-1, pp. 265-283. Morgan Kauffman, 1991] o CMA-ES [N. Hansen, A. Ostermeier, "Completely de-randomized self-adaptation in evolution strategies", Evolutionary Computation Vol. 9 (2), pages.159-195, 2001].

In accordance with the methodology defined in this invention, the three stages of the superimposition process correspond to the following three subsystems:

**1. Cranial 3D modelling subsystem:** Its purpose is the construction of 3D models of the skull based on partial views taken with the capture system. For this, image recording techniques based on optimization and search algorithms are used.

**2. Skull-face projection subsystem:** Its purpose is to properly project the 3D model of the skull over the 2D photograph of the missing person's face automatically. It is based on optimization and search algorithms as well as on the use of fuzzy logic techniques for modelling the uncertainty inherent to the problem.

**3. Decision making aid subsystem:** Fuzzy decision making help system to assist the forensic anthropologist in the identification using the association of craniometric and cephalometric points as a partial pairing process. In addition to these three subsystems, two other optional systems assist the projection subsystem in achieving results that are more robust and of better quality, in less time.

**4. Cranial 3D model positioning subsystem:** Its purpose is the automatic positioning of the 3D model of the skull with an initial orientation near the orientation of the face in the photograph.

**5. Craniofacial superimposition manual refinement subsystem:** Image editing tool for manually refining the craniofacial superimposition achieved using the skull-face projection subsystem.

The use of subsystem 4 decreases the time required for carrying out the automatic superimposition due to the reduction of the search space, which entails having a skull in an orientation near the search. Additionally, this initial positioning grants a greater robustness to the provided results. Finally, subsystem 5 allows for a manual refining of the superimposition achieved in the previous stage. However, in the majority of cases, the automatic superimposition obtained does not require any manual refining and therefore, the stage associated with this subsystem, is in many cases unnecessary.

Thus, contrary to other systems and methods covered in the state of the art, this invention covers, overall and with a new approach, each one of the tasks associated with the superimposition process.

Each one of the five subsystems that make up this invention are described below, including the advantages of the invention relative to the state of the art mentioned in the previous section.

**Cranial 3D modelling subsystem**

The purpose of this subsystem is to obtain a three-dimensional digital model of the skull. An image acquisition device is used to obtain this model. When this device acquires partial images of the surface of the cranial, a method for properly aligning the different partial images is used.

This subsystem is based on a thorough and automatic selection process of the points most representative of the skull, which are present in each one of the views. These characteristic points facilitate not having to work with the complete model, synthesizing it for processing afterwards. Once these points have been selected, an optimization and search process is carried out for the purpose of providing the geometric transformation that is able to make a set of images coincide as accurately as possible. Contrary to other current methods, the multiple views of the cranial are simultaneously added. This approach has the advantage of reducing the accumulated error when the integration is carried out progressively between adjacent images. This way, more accurate 3D models of the skull are achieved.

Another advantage with respect to methods of the state of the art is that it allows for the degree of overlap between two consecutive views to be minimal. This is achieved thanks to the robust treatment of the distances between points of different views, which have been paired. That is, to calculate the geometric transformation that places each view in the proper position for obtaining the 3D model of the skull, only those pairings between points that are not farther than a threshold with respect to the distribution of distances between paired points will be considered.

Eight views of the skull will suffice in order to carry out a complete reconstruction of the skull. This results in a very significant saving of storage space with respect to other techniques, which are only able to handle a slight misalignment between consecutive views.

### Skull-face projection subsystem

This subsystem is responsible for automatically ensuring the best possible projection of the skull over the photograph. Therefore, this is an image recording problem, looking for the transformation that places two different 3D/2D images in the same coordinates system (rotation, translation, change the scale, etc.).

Regarding this invention, the problem consists of finding the recorded transformation that places the 3D model of the skull in the same pose it was in when the picture of the missing person was taken.

The definition of geometric object transformation depends on the number of unknowns originating from the different sources: a) The configuration of the camera, where knowing parameters such as the aperture of the camera lens or the distance between the camera and the missing person when the photograph was taken and b) the model of the skull: It will have a specific orientation and a resolution and size determined by the technical characteristics of the image capture system as well as by the skull modelling process.

Once we have defined the parameters that represent the geometric transformation required for carrying out the craniofacial superimposition task, the intent is to find the combination of values for the unknowns in the defined equations system, which will result in the best possible projection. Therefore, this is a numeric optimization problem, which in this invention is solved using advanced optimization and search algorithms such as for example, the aforementioned (Scatter Search, CHC or CMA-ES).

The implemented method carries out a search within the limits established for each unknown for the purpose of ensuring the resulting transformation minimizes the distance between the paired marker pairs (on the skull and face).

Given that we seek the best overlap of landmarks located on two different objects (face and skull), whose distance is not necessarily null, it is not convenient to follow an approach based on minimizing the Euclidean distance between each pair of landmarks. The reason for this is that the correspondence between facial and cranial landmarks is not always symmetric and perpendicular. For example, some landmarks are located at a higher position on the face with respect to the corresponding marker on the skull. Therefore, a much more realistic and complex approximation consists in considering the uncertainty inherent to the craniofacial superimposition process, which has not been carried out to date by any other work in the state of the art. From this point of view, two types of uncertainties can be differentiated:

a) On one hand, the uncertainty of the location refers to the great difficulty inherent with the task of placing the landmarks at an invariable location and with the precision required for this application. In fact, each forensic anthropologist tends to place these points at different locations (although close to each other). Even though the landmarks are selected with the intent of them being as invariable as possible, factors such as changes in facial expressions or age differences make it more difficult for the anthropologist to accurately locate these points. In addition to the difficulty inherent when locating the landmarks, the available information is not always in the best condition. For example, the ambiguity for locating points may sometimes be due to reasons such as the variation in the distribution of shadows due to the lighting conditions at the time the photograph was taken, improper focus, poor quality of the image, etc. This way, the cause of the ambiguity and therefore its nature may vary from one image to another and even from one characteristic to another in the same image.

b) On the other hand, the uncertainty in the pairing refers to the uncertainty involved in the correspondence between landmarks associated with different objects. The face and the skull. A certain distance exists between each craniometric point on the skull and its corresponding cephalometric point on the photograph. This distance is due to a certain amount of tissue that separates the landmarks on the skull bone from their corresponding landmarks on the face. Additionally, the craniometric and cephalometric points are associated with biologically significant locations. If we study the skull and the face separately, we can see how the significant points on the skull are not always located exactly on top of the corresponding significant points on the face. This way, a perfect superimposition of all the landmarks will never occur, even if the optimum position of the skull with respect to the photograph is achieved. Some will be very close while others will be separated by a very small but significant distance. Please note that not all landmarks contribute equally to the uncertainty of the pairing: The longer the distance between a cephalometric point and a craniometric point, the greater the contribution of this pair of points to the total uncertainty of the pairing.

This invention covers the problem of uncertainty in the craniofacial superimposition process considering the two mentioned uncertainty sources:

a) On one hand, using fuzzy landmarks, which forensic scientists have already shown an interest in. In particular, the forensic expert can locate landmarks of any size he desires according to the spatial variability he considers that each reference point may have in a specific image or skull model. The implementation of fuzzy landmarks in this invention has the following characteristics:

- A fuzzy two-dimensional set corresponds to each fuzzy reference point, whose limits are represented by the pixels bordering the point. This fuzzy set provides the degree of belonging of each pixel of the fuzzy reference point according to the chosen function (triangular, gaussian, trapezoidal, etc.) and the location of the centroid (point with the greatest degree of belonging) determined by the forensic expert. This degree of belonging is defined as the degree of possibility that said pixel is in fact the exact location of the marker.

- The distance between each pair of points contained in the fuzzy landmarks in question is calculated using this method. Afterwards, the final fuzzy distance is calculated taking into account the degree of belonging of each point. The results of the superimpositions show that the fuzzy approximation is able to model the uncertainty involved in locating the landmarks, allowing the use of landmarks of the size desired by the forensic expert. This allows forensic experts to locate landmarks that they would not be able to position using current systems, since they are not able to determine their exact position with absolute confidence. The fact that more landmarks are available, improves the quality of the superimpositions carried out using this method and therefore, of the final result provided by the system.

b) On the other hand, this invention also covers the uncertainty in pairing. Its implementation in this invention has the following characteristics:

- According to the knowledge of forensic expert, fuzzy sets are defined that model the real distance that may exist between each craniofacial point and its corresponding cephalometric point. For each pair of landmarks there is a two-dimensional fuzzy set that models the distance allowed between them; in other words, the "tolerance of the features" of the pairing. Specifically, the most probable distances according to forensic anthropologists correspond with the highest confidence levels. As the distances increase, the confidence in this pair decreases.

- The aforementioned calculation of the fuzzy distance varies by including uncertainty in the pairing. The search algorithm no longer attempts to minimize the distance between pair of points; instead, it attempts to adjust the distances between pair of landmarks to those with a higher level of confidence according to the fuzzy sets that model the actual distance.

The results of the superimpositions show that the fuzzy approximation is able to model the uncertainty involved in the pairing of landmarks. Current systems try to minimize the absolute distance between each pair of landmarks. By the contrary, the operation of this system includes the knowledge of forensic experts, which have defined each confidence interval for each distance between each pair of landmarks. This causes the search process to not minimize distances, but attempts for these to be as close as possible to the real distances that exist between craniometric and cephalometric points. Said distances are different for each case and for each pair of landmarks. The inclusion of this expert knowledge in the craniofacial superimposition subsystem greatly improves the quality of the superimpositions and therefore of the final result provided by the system.

Finally, very accurate craniofacial superimpositions are obtained with this subsystem, which allows studying the possible skull-face correspondence. Additionally, the result of the skull-face projection subsystem may be used (if the forensic expert desires) as a starting point to manually refine the superimposition obtained automatically and assisted by the computer. The advantage of this case with respect to the normal forensic procedure is that it uses a very high quality superimposition with the consequent time savings.

**Decision making aid subsystem**

This subsystem is in charge of assisting the forensic anthropologist in making the final decision of identification based on the pairing of the landmarks found in the superimposition of the previous subsystem.

Thanks to the use of fuzzy logic in the skull-face projection subsystem, the uncertainty in the location of the landmarks as well as that associated with their pairing is transferred to this subsystem. The objective is to provide a confidence measurement used to evaluate the superimposition that has been carried out.

To accomplish this, a fuzzy inference system is designed in this subsystem with assistance from the forensic experts. The inputs to this system are the degrees of certainty in the location of the landmarks and the pairing of each pair of points. Fuzzy addition operators are used to combine and make the final decision.

Via the fuzzy inference mechanism that models the knowledge of forensic anthropologists, the system provides a recommendation to the forensic anthropologist regarding the degree of correspondence between the model of the found skull and the photograph of the missing person's face. This recommendation may be one of the following five: Positive, negative, probably positive, probably negative or uncertain. The certainty value associated with the recommendation is also provided.

The advantages provided by the inclusion of this subsystem are very important since on one hand, it aids the forensic expert in issuing a final judgment regarding the correspondence between the skull and the face and on the other hand, it can also be used independently, without the need for a forensic expert. Also, based on this last operational description, the present invention allows comparing a single skull against a repository of photographs of missing persons, selecting the photograph with the highest degree of correspondence with the skull. In this case, it also provides a recommendation to the expert (positive, negative, probably positive, probably negative or uncertain) and the degree of certainty associated with the recommendation.

**Cranial 3D model positioning subsystem**

The purpose of this subsystem is to place the skull in a pose that is close to the orientation of the face in the photograph. This way, the search space is notably decreased as the limits of the allowed rotations are marked by the craniofacial superimposition subsystem in each of the three axes. This reduction in search space results in a decrease in the time required for carrying out the skull-face projection task while also causing the results of the system to be more robust.

In order to carry out this initial orientation of the skull first, its position with respect to the camera is obtained. This is obtained by calculating the vector orthogonal to the plane formed by three skull landmarks (craniometric points) that have been selected beforehand. From this vector, the angles of the three rotations required for positioning the cranial in front of the camera are calculated (and applied). This is not a complicated task, there are no tasks in the state of the art that carry out this initial positioning of the skull in front of the camera, which is something that helps the superimposition process, making it quicker and more robust.

Also, since the pose of the person in the photograph does not necessarily have to be facing the camera, the pose, (three angles of rotation: roll, pitch y yaw) is calculated to place the skull in the same pose, again using three rotations. Although there are methods in the state of the art for calculating the initial pose of the face [Murphy-Chutorian, E., Manubhai Trivedi, M. "Head Pose Estimation in Computer Vision: a Survey", IEEE Transactions on Pattern Analysis and Machine Intelligence vol.31, no.4, 2009], our own method was designed for this invention since none of these can be used for solving our problem. Automatic learning approaches exist, which have the inconvenience of requiring a large number of photographs (with the 3 known pose angles) for its calibration. In addition to not finding any set of images tagged with the 3 pose angles (only with 2), these methods do not produce satisfactory results relative to the images used for the forensic identification; instead, they use images in different environments (luminosity, face occlusions, image resolution, etc.). Other works that follow a geometric approach were not valid for different reasons; some because they required knowing data relative to the camera such as the focal distance, others because they were limited to frontal views, others for using images in 2.5D and others because they focus on video tracking.

The method used for finding the face pose in the photograph on one hand used the cephalometric points of the vertical axis of the face (the forensic expert can mark up to seven different ones; they are interpolated over the available points) to find said axis. Two of the cephalometric points at the height of the eyes are used (of the four possible) from which a horizontal axis is traced. The base of the nose is placed over the vertical axis using one of the cephalometric points in this area (three are available; two alare and one subnasal). Then, the tip of the nose is detected using a "window" of pixels, finding the point with the greatest intensity in this window. Once the axis and the base points for the nose and tip are found, then the three angles that determine the pose of the face can be calculated. The "roll" is calculated separately, by directly measuring the inclination of the horizontal axis of the eyes with respect to the horizontal axis of the image plane. For calculating "pitch" and "yaw", a series of equations are used that establish geometric relationships in the face plane and its displaying in 3D.

Although as a result of this subsystem, the precision in the orientation of the skull is not the desired, an orientation that is very close to the actual is achieved and therefore the optimization of this parameter in the superimposition subsystem is restricted to a smaller search space, with the subsequent time savings.

**Craniofacial superimposition manual refinement subsystem**

The craniofacial superimposition manual refinement subsystem is a 2D/2D image edition tool designed in ad-hoc. The objective is to provide the invention user with the possibility of manually refining the superimposition that was automatically obtained in the previous stage. At first, it would not always be necessary because the approximation obtained automatically is of high quality. If used, this automatic approximation would always be an initialization that is very close to the final result desired by the forensic expert. This tool allows to:

(a) Manipulate the 3D model of the cranial parting from an initial position,

(b) Rotate, scale and translate the 3D model of the cranial,

(c) Adjust the perspective transformation of the 3Dmodel of the cranial, and

(d) Save the achieved craniofacial superimposition and the corresponding value of the transformation parameters.

Contrary to other tools that may be used for manipulating three-dimensional objects or others designed for working with two-dimensional images, this tool integrates the use of 3D models with 2D photographs. For this, it allows modifying the perspective transformation associated with the superimposition, without which adequate superimpositions cannot be achieved. Note that this subsystem adds value to the invention by granting the possibility of conducting a manual processing of the automatically generated superimposition.

## DESCRIPTION OF THE FIGURES

To complement the description that is subsequently going to be stated and for the purpose of better understanding the characteristics of the invention; provided as an integral part of said description is a set of figures, which represent the following in an illustrative but not a limiting fashion:

Figure 1 represents a general diagram of the image recording problem. Said problem parts from an image 1 ("scene"), which wants to be placed in the same coordinate axes as another image 2 ("model"). To accomplish this, 3 (f transformation) is applied to the scene image and it is assessed if there is a good pairing by means of 4 (similarity metric). If in 5, convergence, the result is yes (the method has converged), 6 is obtained, final f. Otherwise, the intent is to iteratively optimize 7, new f transformation, until a valid pairing is obtained by means of 8, optimizer.

Figure 2 schematically represents the three stages of the process carried out by the forensic craniofacial superimposition identification system. First in 1, a photograph and model of the skull is obtained, and the proper landmarks are located on both. Then, a skull-face is projected, 2. Based on the superimposition obtained in this manner, it is determined (3) if the skull and photograph correspond to the same person and with what degree of certainty.

Figure 3 schematically represents the different landmarks that are normally used on the face (cephalometric points) for the craniofacial superimposition. These are: 1 Glabella, 2 Nasion, 3 Endocanthion, 4 Ectocanthion, 5 Subnasale, 6 Alare, 7 Labiale superius, 8 Zygion, 9 Labiale inferius, 10 Pogonion, 11 Gonion, 12 Gnathion, 13 Tragion, 14 Menton.

Figure 4 schematically represents the different landmarks that are normally used on the skull (craniometric points) for the craniofacial superimposition. These are: 1 Vertex, 2 Glabella, 3 Nasion, 4 Frontotemporal, 5 Dacryon, 6 Frontomalar temporal, 7 Orbital, 8 Alare, 9 Zygion, 10 Nasospinale, 11 Prosthion, 12 Gonion, 13 Pogonion, 14 Gnathion, 15 Porion.

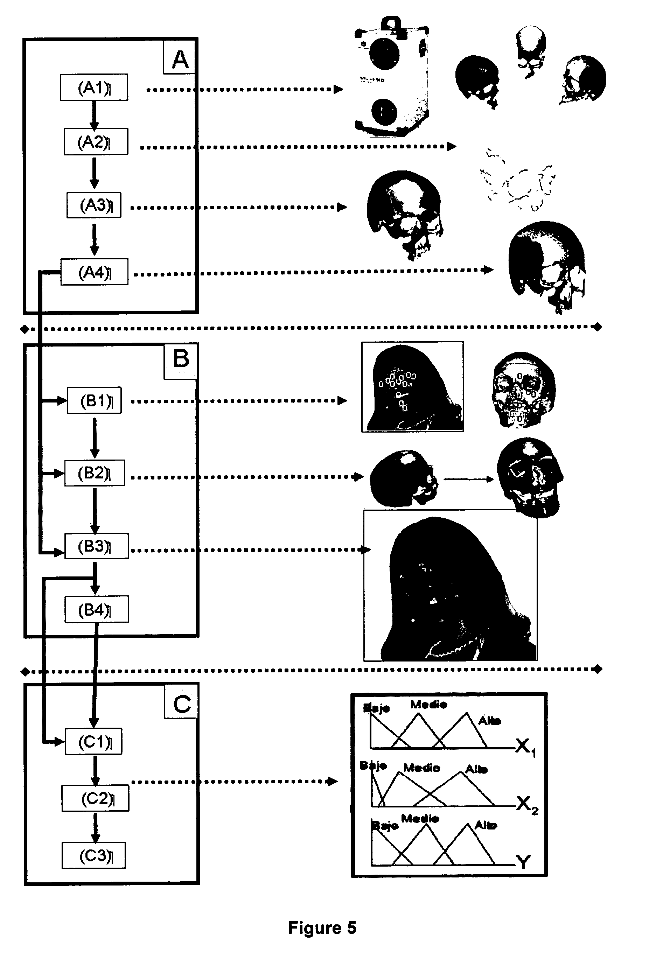

Figure 5 represents a flow diagram of a preferred embodiment of the method process carried out by the system described in this invention via different stages: A, reconstruction of a three-dimensional model of the skull; A.1, obtaining of images of different views of the skull devised using a Konica-Minolta laser range scanner VI-910, A.2, obtaining of the crest lines of the different views obtained in A.1; A.3, pre-aligning of the images obtained in A.2 using the Scatter Search optimization algorithm; A.4, refining of the 3D model obtained in A.3 using the ICP algorithm; B, skull-face projection of the 3D model of the skull and face of the photograph; B.1, positioning of the landmarks over a model of the skull obtained in A.4 and the photograph of the missing person; B.2, re-orientation of the skull obtained in A.4 to a pose similar to that of the face in the photograph; B.3, skull-face display via the Scatter Search optimization algorithm for the pairing of landmarks using fuzzy sets for the modelling of landmarks with uncertainty; B.4, manual refining of the superimposition obtained in B.3; C, decision making aid; C1, issuing of the uncertainty obtained in stage B.3 for each pair and overall uncertainty calculation; C.2, calculation of the degrees of partial pairing of the landmarks; C.3, providing a recommendation after applying a fuzzy addition operator.

## DESCRIPTION OF A PREFERRED EMBODIMENT

Figure 5 shows a flow diagram of a preferred embodiment of the process carried out by the system described in this invention: The following specific characteristics are differentiated:

1. In the obtaining of images of different views of the skull stage, A.1, the acquiring device is a Konica-Minolta laser range scanner VI-910. A rotating table is not used for the acquisition,

2. the crest lines extraction is used as a process for extracting the characteristics of the different acquired views, stage A.2,

3. to carry out the pre-aligning of images, stage A.3, follows a methodology in which all the views of the 3D model are integrated at the same time, minimizing the error,

4. the refining phase A.4, used the 3D model resulting from the previous stage as an input and refines the pairing of the views using a deterministic algorithm that is based on gradients, ICP,

5. stage B.1 uses ellipses for locating the cephalometric points and the points of a pixel for positioning the craniometric points.

6. stage B.2 is based on the landmarks located in the previous stage for determining the position of the skull. Specifically, to place the skull in front of the camera, the two dacryons and the nasospinale are used and to obtain the pose of the face in the photograph, two ectocanthions are used to obtain the horizontal axis, the gnathion and glabella are used for the vertical axis and the subnasal for obtaining the tip of the nose,

7. to perform the skull-face projection, stage B.3, the correspondence between the 3D model of the skull and the photograph of the face is carried out using similarity transformation sets and perspective projections. These transformations consist of the following.

- R Rotation. Transformation that seeks placing the skull in the same pose as that in the photograph. The following is needed to define the rotation: The direction of the rotation axis (dx, dy, dz), the location of the rotation axis with respect to the coordinates centre (rx, ry, rz) and the $\theta$ angle.

- S Scaling. Transformation that seeks to uniformly adapt the size of the model of the skull based on the size of the missing person in the photograph.

- T Translation. Transformation (tx,ty,tz) that seeks positioning the origin of coordinates in front of the camera (reproducing the initial conditions of the moment in which the photograph was taken).

- P perspective projection. Transformation that attempts to determine how far the camera is from the skull and it has a strong relationship with the camera's angle of vision ($\Phi$).

All these transformations result in a system of equations with twelve unknowns (rx,ry,rz,dx,dy,dz,$\theta$,S,tx,ty,tz, $\phi$) that represent the geometric transformation that pairs each marker of the 3D model of the skull with its corresponding facial marker in the photograph.

The resulting system of equations is the following:

$$F = C \times S \times T \times P$$

Where:

$$R = A \times D_1 \times D_2 \times \Theta \times D_2^{-1} \times D_1^{-1} \times A^{-1}, \quad F = \begin{bmatrix} x_{f_1} y_{f_1} 1 1 \\ x_{f_2} y_{f_2} 1 1 \\ \vdots \\ x_{f_N} y_{f_N} 1 1 \end{bmatrix} \text{ y, } C = \begin{bmatrix} x_{c_1} y_{c_1} z_{c_1} 1 \\ x_{c_2} y_{c_2} z_{c_2} 1 \\ \vdots \\ x_{c_N} y_{c_N} z_{c_N} 1 \end{bmatrix}$$

The Scatter Search algorithm is used as the optimization method, which searches for the values of the twelve unknowns of the aforementioned system of equations so the resulting transformation minimizes the lens function (or error function).

The lens function (or error function) is the mean of the sum of the distances between each pair of landmarks to be paired (each skull marker [craniometric point], must be paired with a marker on the face [cephalometric point]). The considered distance is a "fuzzy" distance that takes into account the uncertainty relative to each marker (the larger the size of the ellipse representing the marker, the greater the uncertainty).

It is very important to highlight the time required for carrying out this task in the invention, which in worst case will never exceed five minutes using a conventional PC. Comparing this time with the 24 hours that it may take a forensic anthropologist to perform a computer aided manual superimposition, the improvement is very significant; even more so if we take into account that in many cases, the superimposition must be carried out of the same skull over the different available photographs.

Lastly, based on the distance that exists (fuzzy) between each pair of landmarks (craniometric-cephalometric) and its theoretical distance (fuzzy), an overall degree of uncertainty associated with the superimposition is calculated. Taking into account this uncertainty and making use of a fuzzy addition operator, the system provides a recommendation regarding the cranial-photograph correspondence within the following five possibilities. Positive, negative, probably positive, probably negative or uncertain.

**Claims**

**1.** Forensic identification system that performs a craniofacial superimposition of a 3D model of a skull and a photograph, which includes the face of a person, **characterized by**:

(a) a skull 3D modelling subsystem that provides a 3D model of the skull from partial views of it using an optimization and search algorithm
(b) a skull-face projection subsystem that pairs the 3D model of the skull with the face of the photograph using an optimization and search algorithm.
(c) a decision making aid subsystem that assesses the correspondence between the paired skull and face
(d) an initial positioning subsystem of the 3D model of the skull, which provides a first estimation of the better position of the model of the skull in the photograph
(e) a manual refining subsystem of the craniofacial superimposition that modifies the skull-face pairing performed by the system according to the user's preferences,

**2.** Forensic identification system that uses craniofacial superimposition in accordance with claim 1, **characterized in that** the skull 3D modelling subsystem uses an optic device that provides several partial views of the skull and includes the following phases:

(a) acquisition of the different partial views of the skull where each view is a partial image of the skull surface,
(b) synthesis of the information of each partial view of the skull by extracting the characteristics of the image invariable to the transformation that relates each pair of adjacent views,
(c) pre-alignment of the different images obtained using an optimization algorithm,
(d) refining of the 3D model obtained in the previous stage using a local search algorithm.

**3.** Forensic identification system that uses craniofacial superimposition in accordance with claim 1, **characterized in that** the skull 3D modelling subsystem of claim 2 is able to carry out a proper 3D reconstruction of the skull based on partial views of the skull.

**4.** Forensic identification system that uses craniofacial superimposition in accordance with claim 1, **characterized in that** the device used for the phase (a) of claim 2, acquisition of different partial views of the skull, may be a laser range scanner, an optic image system based on flight time or any optic device capable of obtaining images with accurate depth information.

**5.** Forensic identification system that uses craniofacial superimposition in accordance with claim 1, **characterized in that** the pre-aligning of images phase of claim 2 can follow a methodology that progressively integrates adjacent views, or a methodology in which all the views are integrated at the same time.

**6.** Forensic identification system that uses craniofacial superimposition in accordance with claim 1, **characterized in that** the skull-face projection subsystem includes the following phases:

(a) coding of the 3D-2D projective transformation,
(b) establishing of the intervals of possible values for each one of the uncertainties of the chosen projective transformation,
(c) search of the 3D-2D transformation (combining of values for the uncertainties) that results in an adequate superimposition using an optimization and search algorithm.

**7.** Forensic identification system that uses craniofacial superimposition in accordance with claim 1, **characterized in that** the search algorithm used in stage (c) of claim 6 may be one of the following: Scatter Search, CHC, CMA-ES.

**8.** Forensic identification system using craniofacial superimposition in accordance with claim 1, **characterized in that** to achieve an appropriate superimposition in stage (c) of claim 6, it is necessary to minimize one of the following functions:

(a) the mean of the sum of the Euclidian distances between pairs of cephalometric reference points and their corresponding craniometric reference points once transformed to 2D, if the uncertainty is not taken into account,
(b) the fuzzy distances between pairs of cephalometric reference points and their corresponding craniometric reference points once transformed to 2D, if only the uncertainty is taken into account for the location of the landmarks,
(c) the difference between the approximate physiognomic distances between pairs of craniometric-cephalometric points and the distance between pairs of cephalometric points and their corresponding craniometric points once transformed to 2D, if the uncertainty is taken into account for the location and pairing of the landmarks

**9.** Forensic identification system that uses craniofacial superimposition in accordance with claim 1, **characterized in that** the skull-face projection subsystem of claim 6 graphically shows the result of the superimposition of the 3D skull projected over the target photograph.

**10.** Forensic identification system that uses craniofacial superimposition in accordance with claim1, **characterized in that** the skull-face projection subsystem of claim 6 includes an interface that interacts with the user so that he can adjust the parameters used in the superimposition process for obtaining superimpositions that are different from the ones proposed by said system.

**11.** Forensic identification system that uses craniofacial superimposition in accordance with claim 1, **characterized in that** the decision making aid includes the following stages:

(a) propagation of the uncertainty obtained in the skull-face projection subsystem of claim 1,
(b) analysis of the pairing of the superimposition obtained in the skull-face projection subsystem of claim 1,
(c) issuance of a recommendation.

**12.** Forensic identification system that uses craniofacial superimposition in accordance with claim 1, **characterized** because the uncertainty relative to the inaccurate location of the craniometric and cephalometric points is propagated in the uncertainty propagation stage of the decision making aid subsystem,

**13.** Forensic identification system that uses craniofacial superimposition in accordance with claim 1, **characterized** because the uncertainty relative to the inaccurate pairing between pairs of craniometric and cephalometric points is propagated in the uncertainty propagation stage of the decision making aid subsystem.

**14.** Forensic identification system that uses craniofacial superimposition in accordance with claim 1, **characterized in that** the analysis stage of the pairing of the superimposition obtained from the decision making aid subsystem uses a fuzzy system that models the expert knowledge of forensic anthropologist experts.

**15.** Forensic identification system that uses craniofacial superimposition in accordance with claim 1, **characterized in that** the issuance of a recommendation stage of the decision making aid subsystem issues one of the following recommendations regarding the obtained craniofacial superimposition (correspondence of the photograph of the face with the 3D model of the skull): Positive identification, negative, probably positive, probably negative or uncertain, and an associated confidence level is provided.

**16.** Forensic identification system that uses craniofacial superimposition in accordance with claim 1, **characterized in that** the initial position of the 3D model of the skull includes the following phases:

(a) obtaining of the position of the 3D model of the skull with respect to the camera using three Euler angles,
(b) application of the three Euler angles calculated in (a) for placing the skull in a position facing the camera,
(c) obtaining of the orientation of the face in the photograph using three Euler angles,
(d) application of the three Euler angles calculated in (c) for positioning of the skull in the same pose as that estimated of the face in the photograph.

**17.** Forensic identification system that uses craniofacial superimposition in accordance with claim 1, **characterized in that** phase (a) of claim 16 includes the following phases:

(a) calculation of the facial plane of the 3D model of the skull using the front cephalometric points,
(b) calculation of the normal vector to the facial plane,
(c) calculation of the rotations required in order to orientate the normal vector to the facial plane towards the camera's axis.

**21.** Forensic identification system that uses craniofacial superimposition in accordance with claim 1, **characterized in that** stage (c) of claim 16 includes the following phases:

(a) calculation of the central vertical axis of the face and the horizontal axis that runs across the centre of the eyes,
(b) calculation of the base and the tip of the nose,
(c) calculation of the three Euler angles that define the orientation of the face in the photograph based on the points and axes calculated in (a) and (b) as well as the equations that define the geometric relationships of a face.

**22.** Forensic identification system using craniofacial superimposition in accordance with claim 1, **characterized in that** the manual refining of the craniofacial superimposition subsystem is a 3D/2D image editing tool that allows carrying out the following:

(a) manipulate the 3D model of the skull from the initial position provided by the skull-face projection subsystem of claim 1,
(b) rotate, scale and translate the 3D model of the skull,
(c) adjust the perspective transformation of the 3D model of the skull,
(d) modify the intrinsic and extrinsic parameters of the camera,
(e) save the achieved craniofacial superimposition and the corresponding value of the transformation parameters.

**Figure 1**

**Figure 2**

**Figure 3**

**Figure 4**

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 0111631 A
- US 0196000 A
- US 7421097 B

### Non-patent literature cited in the description

- **K.W. Bowyer ; K. Chang ; P. Flynn.** A survey of approaches and challenges in 3D and multi-modal 3D + 2D face recognition. *Computer Vision and Image Understanding,* 2006, vol. 101, 1-15
- **D.H. Ubelaker ; E. Bubniak ; G. O'Donnel.** Computer-assisted photographic superimposition. *Journal of Forensic Sciences,* 1992, vol. 37 (3), 750-762
- **M. Yoshino ; H. Matsuda ; S. Kubota ; K. Imaizumi ; S. Miyasaka ; S. Seta.** Computer-assisted skull identification system using video superimposition. *Forensic Science International,* 1997, vol. 90, 231-244
- **A. Ricci ; G.L. Marella ; M.A. Apostol.** A new experimental approach to computer-aided face/skull identification in forensic anthropology. *American Journal of Forensic Medicine and Pathology,* 2006, vol. 27 (1), 46-49
- **D.H. Ubelaker.** A history of Smithsonian-FBI collaboration in forensic anthropology, especially in regard to facial imagery. *Forensic Science Communications,* 2000, vol. 2 (4
- **A. Ghosh ; P. Sinha.** An economised craniofacial identification system. *Forensic Science International,* 2001, vol. 117 (1-2), 109-119
- **B.A. Nickerson ; P.A. Fitzhorn ; S.K. Koch ; M. Charney.** A methodology for near-optimal computational superimposition of two-dimensional digital facial photographs and three-dimensional cranial surface meshes. *Journal of Forensic Sciences,* 1991, vol. 36 (2), 480-500
- **D.E. Goldberg.** Genetic algorithms in search, optimization, and machine learning. Addison-Wesley, 1989
- **P.P. Bonissone.** Soft computing: The convergence of emerging reasoning technologies. *Soft Computing,* 1997, vol. 1 (1), 6-18
- Fuzzy sets, fuzzy logic, and fuzzy systems: selected papers by Lotfi A. Zadeh. World Scientific Publishing, 1996
- Handbook of Metaheuristics. Kluwer Academic Publishers, 2003
- Handbook of Evolutionary Computation. IOP Publishing Ltd and Oxford University Press, 1997
- **Laguna, M. ; Marti, R.** Scatter Search: Methodology and Implementations in C. Kluwer Academic Publishers, 2003
- The CHC adaptive search algorithm: How to have safe search when engaging in non-traditional genetic recombination. **Eshelman, L. J.** Foundations of Genetic Algorithms-1. Morgan Kauffman, 1991, 265-283
- **N. Hansen ; A. Ostermeier.** Completely de-randomized self-adaptation in evolution strategies. *Evolutionary Computation,* 2001, vol. 9 (2), 159-195
- **Murphy-Chutorian, E. ; Manubhai Trivedi, M.** Head Pose Estimation in Computer Vision: a Survey. *IEEE Transactions on Pattern Analysis and Machine Intelligence,* 2009, vol. 31 (4